# EUROPÄISCHE PATENTSCHRIFT

(11) **EP 3 042 865 B1**
(45) Veröffentlichungstag und Bekanntmachung des Hinweises auf die Patenterteilung: **20.12.2017**
(21) Anmeldenummer: 15202250.5
(22) Anmeldetag: 23.12.2015
(51) Int. Cl.: B65G 1/02, A47B 96/06, A47B 47/00, A47B 47/02, F16B 12/42, E04B 1/58, E04G 7/26

(54) **REGALSYSTEM MIT HALTER ZUM BEFESTIGEN EINES ANSCHLAGS AN EINER REGALSTÜTZE**
SHELF SYSTEM WITH SUPPORT FOR FIXING A STOP AGAINST A SHELF SUPPORT
SYSTEME DE RAYONNAGE AVEC UN SUPPORT DE FIXATION D'UNE BUTEE SUR UN SUPPORT DE RAYONNAGE

(30) Priorität: 09.01.2015 DE 102015100202
(43) Veröffentlichungstag der Anmeldung: 13.07.2016
(73) Patentinhaber: BITO-Lagertechnik Bittmann GmbH, 55590 Meisenheim (DE)
(72) Erfinder: LÖRSCH, Andreas, 55621 Hundsbach (DE)
(74) Vertreter: Richardt Patentanwälte PartG mbB

(56) Entgegenhaltungen:
- DE-U1-202014 105 051
- US-A- 4 867 596
- US-A- 4 874 148
- US-A1- 2009 272 861

## Beschreibung

Die Erfindung betrifft ein Regalsystem mit einem Halter zum Befestigen eines Anschlags an einer Regalstütze eines Regals. Aus dem Stand der Technik sind Regale bekannt, mit Regalstützen auf dem Boden stehen und über Auflagen verfügen. Die Auflagen dienen dazu, Stückgut wie z.B. Kartons oder Paletten aufzunehmen. Um zu verhindern, dass bei einer Beschickung des Regals von vorne auf den Regalpanelen abgesetztes Stückgut nach hinten vom Regal fallen kann, ist es bekannt, Anschläge für die Regalpanele vorzusehen. Beispielsweise offenbart die DE 20 2014/105051 U1 einen Anschlag für ein Regal.

Der Erfindung liegt die Aufgabe zugrunde, ein verbessertes Regalsystem zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Regalsystem mit einem Anschlag und Regalstützen, wobei das Regalsystem eine Auflage für im Regalsystem zu lagerndes Stückgut aufweist, wobei der Anschlag dazu ausgebildet ist, eine Anschlagfläche für das zu lagernde Stückgut bereitzustellen, sowie ein Halter zum Befestigen des Anschlags an einer der Regalstützen eines Regals angegeben, wobei der Halter einen ersten und einen zweiten Schenkel aufweist, wobei der erste Schenkel und der zweite Schenkel über eine Kontaktstelle aneinander fixiert sind, wobei der erste Schenkel ein erstes Befestigungsmittel zur Fixierung des ersten Schenkels an der Regalstütze aufweist, wobei sich der erste Schenkel im montierten Zustand parallel zur Erstreckungsrichtung der Regalstütze erstreckt, wobei das erste Befestigungsmittel in der Erstreckungsrichtung gesehen auf der der Kontaktstelle abgewandten Hälfte des ersten Schenkels angeordnet ist und die der Kontaktstelle zugewandte Hälfte des ersten Schenkels frei von weiteren Befestigungsmitteln zur Fixierung des ersten Schenkels an der Regalstütze ist, wobei der zweite Schenkel ein zweites Befestigungsmittel zur Befestigung des Anschlags am zweiten Schenkel aufweist, wobei die Schenkelflächen des ersten Schenkels und des zweiten Schenkels abgewinkelt zueinander angeordnet sind, wobei das erste Befestigungsmittel in der Erstreckungsrichtung gesehen auf dem der Kontaktstelle abgewandten ersten Drittel der Schenkelfläche des ersten Schenkels angeordnet ist und die der Kontaktstelle zugewandten Zweidrittel des ersten Schenkels frei von weiteren Befestigungsmitteln zur Fixierung des ersten Schenkels an der Regalstütze sind.

Ausführungsformen der Erfindung könnten den Vorteil haben, dass mit dem besagten Regalsystem die Gefahr eines Bruchs des Halters oder des Anschlags bei einem starken Beanspruchen des Anschlags durch z.B. ein dagegen schlagendes Stückgut minimiert wird. Durch die ausschließliche Fixierung des ersten Schenkels auf der der Kontaktstelle abgewandten Hälfte des ersten Schenkels an der Regalstütze könnte es möglich sein, dass auf den Anschlag wirkende Kräfte über den abgewinkelt angeordneten zweiten Schenkel auf den ersten Schenkel übertragen werden. Da der erste Schenkel jedoch an der Regalstütze fixiert ist, könnte dies zu einem "aufbiegen" des ersten Schenkels auf der dem zweiten Schenkel zugewandten Seite führen. Dieses Aufbiegen dient dem teilweisen Abbau der Energie, welche in Form der auf den Anschlag einwirkenden Kräfte vorhanden ist. Neben einer Abdämpfung des Aufschlags des Stückguts auf den Anschlag wird die Kraft reduziert, welche auf die Befestigung einwirkt, mit welcher der erste Schenkel an der Regalstütze befestigt ist. Damit könnte einem Abreisen dieser Befestigung entgegengewirkt werden.

Nach einer Ausführungsform der Erfindung bilden die Schenkelflächen des ersten Schenkels und des zweiten Schenkels eine L-Form. Z.B. steht der erste Schenkel senkrecht auf dem zweiten Schenkel. Dies könnte den Vorteil haben, dass damit die beim Beanspruchen des Anschlags wirkenden Kräfte aufgrund der Hebelwirkung des zweiten Schenkels in maximaler Weise auf den der Kontaktstelle zugewandten Bereich des ersten Schenkels übertragen werden. Damit könnte gesichert sein, dass der besagte Energieabbau gezielt in diesem Bereich stattfindet und insbesondere ein Abreißen des Anschlags oder des Halters vermieden wird.Gemäß der Erfindung ist das erste Befestigungsmittel in der Erstreckungsrichtung gesehen auf dem der Kontaktstelle abgewandten ersten Drittel der Schenkelfläche des ersten Schenkels angeordnet, wobei die der Kontaktstelle zugewandten Zweidrittel des ersten Schenkels frei von weiteren Befestigungsmitteln zur Fixierung des ersten Schenkels an der Regalstütze sind. Damit könnte der Abstand von den Befestigungsmitteln zur Fixierung des ersten Schenkels von der Kontaktstelle maximiert werden. Auch dies könnte den gewünschten Energieabbau maximieren.

Nach einer Ausführungsform der Erfindung umfasst das erste Befestigungsmittel ein Schraubloch des ersten Schenkels zur Aufnahme von Schrauben.

Nach einer Ausführungsform der Erfindung umfasst das zweite Befestigungsmittel zumindest einen biegesteif mit dem zweiten Schenkel verbundenen Fortsatz, wobei der Fortsatz eine Öffnung zur Aufnahme des Anschlags aufweist. Z.B. weist der Fortsatz eine Aufnahmeöffnung zur Aufnahme des Anschlags auf, wobei die Ebene der Aufnahmeöffnung senkrecht zur Schenkelfläche des zweiten Schenkels steht. Zum einen könnte dadurch eine einfache Montage des Anschlags am Halter realisiert werden. Zum anderen könnte dennoch sichergestellt werden, dass auch hier der Energieabbau insofern maximiert wird, als dass die auf den Anschlag wirkenden Kräfte hoch effektiv auf den Bereich zwischen den Befestigungsmitteln zur Fixierung des ersten Schenkels an der Regalstütze und der Kontaktstelle übertragen werden können. Damit könnte gezielt sichergestellt werden, dass ein eventuelles SichVerbiegen des Halters gerade in diesem Bereich erfolgt und insbesondere ein Abreisen des Halters von der Regalstütze aufgrund des dann minimierten Energieeintrags vermieden wird.

Nach einer Ausführungsform der Erfindung ist die Aufnahmeöffnung zur drehfesten Aufnahme des Anschlags ausgebildet. Z.B. ist die Aufnahmeform eckig. Dies könnte den Vorteil haben, dass auch beim Auftreffen des Stückguts auf eine Kante des Anschlags sich der Anschlag nicht unter dem Stückgut wegdrehen kann, womit das Stückgut über den Anschlag rutschen könnte.

Nach einer Ausführungsform der Erfindung ist der Fortsatz einstückig mit der Schenkelfläche des zweiten Schenkels ausgebildet. Dies könnte eine Herstellung des Halters vereinfachen. Z.B. könnte es sich bei dem Halter um ein einstückiges Metall-Biegeteil handeln.

Nach einer Ausführungsform der Erfindung weist der Halter ferner eine Aussparung der Schenkelfläche des zweiten Schenkels auf, wobei die Aussparung zwischen der Kontaktstelle und dem zweiten Befestigungsmittel angeordnet ist. Z.B. ist die Aussparung durch eine Aussparung des äußeren Randes der Schenkelfläche des zweiten Schenkels gegeben ist. Ferner grenzt z.B. die Aussparung unmittelbar an das zweite Befestigungsmittel an. Das Vorsehen der Aussparung könnte den Vorteil haben, dass aufgrund der hierdurch resultierenden Schwächung des zweiten Schenkels eine zweite Soll-Biegestelle geschaffen wird, an welcher im Falle über den Anschlag einwirkende Kräfte durch Umbiegen des zweiten Schenkels in diesem Bereich abgebaut werden können.
Anstatt oder zusätzlich zu der Aussparung des äußeren Randes könnte auch eine Aussparung in Form einer Perforierung innerhalb der Schenkelfläche des zweiten Schenkels Verwendung finden.

Nach einer Ausführungsform der Erfindung weist der erste Schenkel zumindest zwei der ersten Befestigungsmittel auf und die beiden ersten Befestigungsmittel sind in der Erstreckungsrichtung des Anschlags gesehen symmetrisch zur Schenkelfläche des ersten Schenkels angeordnet. Dies könnte den Vorteil haben, dass der erste Schenkel mit maximaler Kraft gleichmäßig an der Regalstütze befestigt werden kann. Als Resultat könnte vermieden werden, dass ein Sich-Verbiegen des Halters in der Erstreckungsrichtung des aufzunehmenden Anschlags stattfindet, was zu einem Abreisen des Halters von der Regalstütze führen könnte.

Nach einer Ausführungsform der Erfindung ist das zweite Befestigungsmittel von der Kontaktstelle beabstandet, wobei der Abstand mindestens ein Drittel der Erstreckungslänge der Schenkelfläche des ersten Schenkels in der Erstreckungsrichtung der Regalstütze gesehen beträgt. Auch hierdurch könnte die von dem Anschlag auf den zweiten Schenkel wirkende Hebelkraft maximiert werden, so dass sichergestellt sein könnte, dass bei maximalem Energieabbau ein Sich-Verbiegen des Halters gewährleistet ist.

Nach einer Ausführungsform der Erfindung kann die Schenkelfläche des zweiten Schenkels im montierten Zustand senkrecht zur Erstreckungsrichtung der Regalstütze sein. Dies könnte sicherstellen, dass überhaupt ein Sich-Verbiegen des Halters in der gewünschten Form stattfinden kann. Das Sich-Verbiegen des Halters könnte so entlang des maximalen Biegeweges sichergestellt sein, also vom zweiten zum ersten Befestigungsmittel hin.

Z.B. verbindet die Auflage einander benachbarte Regalstützen miteinander.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden bevorzugte Ausführungsformen der Erfindung anhand der Zeichnungen näher erläutert. Es zeigen :
Figur 1 eine perspektivische Ansicht eines Regals,
Figur 2 eine perspektivische Ansicht eines Halters,
Figur 3 eine perspektivische Ansicht.

Im Folgenden werden einander ähnliche Elemente mit den gleichen Bezugszeichen gekennzeichnet.

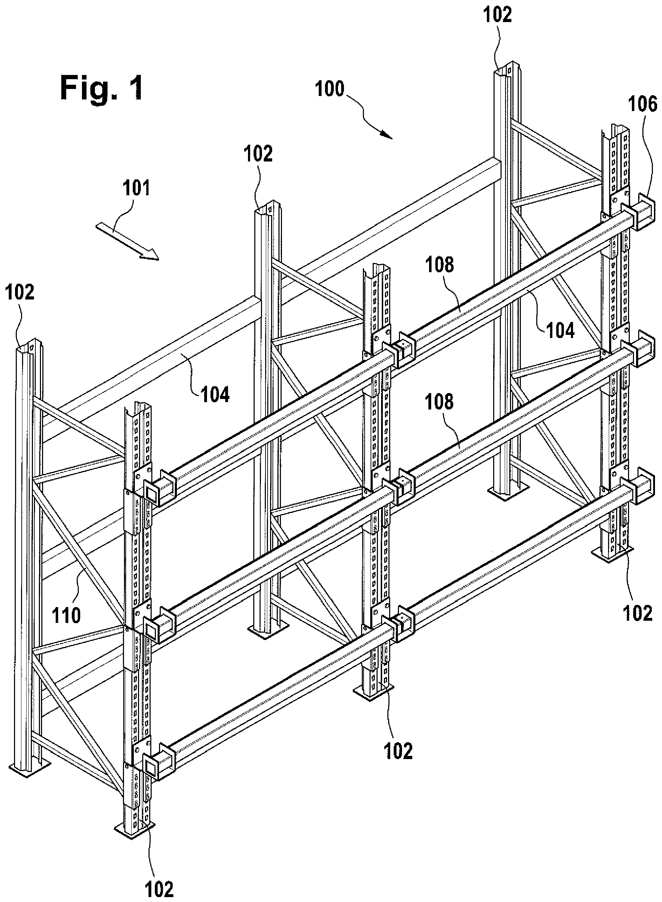

Die Figur 1 zeigt eine perspektivische Ansicht eines Regals 100. Das Regal umfasst Regalstützen, mit welchen das Regal auf dem Boden steht. Die Regalstützen 102 sind durch sogenannte Traversen 104 miteinander verbunden, wobei auf den Traversen Auflagen für im Regal zu lagerndes Stückgut aufgebracht werden können.

Die Auflagen sind jedoch optional und es ist auch möglich, direkt die Traversen als Auflage zu verwenden. Als Stückgut können zum Beispiel Paletten oder Kartons auf dem Regal abgestellt bzw. im Regal 100 gelagert werden.

Neben den Traversen 104 sind ferner noch Querverbinder 110 zur Gesamtstabilisierung des Regals vorgesehen, wobei diese Querverbinder ebenfalls die Regalstützen 102 miteinander verbinden.
Wird nun beispielsweise in Richtung 101 einzulagerndes Stückgut, im Folgenden ohne Beschränkung der Allgemeinheit Paletten, auf den Traversen 104 abgesetzt, so kann es vorkommen, dass beispielsweise mit einem Gabelstapler die Paletten zu weit in Richtung 101 geschoben werden. Damit vermieden wird, dass die Paletten nun auf der Rückseite des Regals nach hinten hinunterfallen, sind Anschläge 108 vorgesehen. Die Anschläge 108 begrenzen den Abstellweg der Paletten nach hinten.

Die Anschläge 108 sind im vorliegenden Fall durch Vierkant-Metallelemente gegeben. Es ist jedoch beispielsweise auch diesbezüglich allgemein ein Rundrohr möglich. Die Anschläge 108 sind über entsprechende Halter 106 an den Regalstützen 102 befestigt.

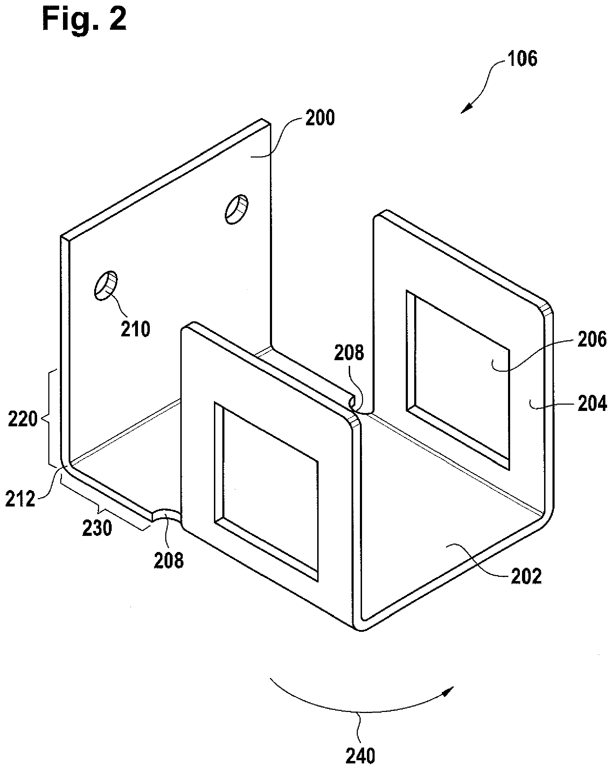

Die Figur 2 zeigt eine perspektivische Ansicht eines Halters 106. Der Halter weist eine L-Form auf und verfügt über einen ersten Schenkel 200 und einen zweiten Schenkel 202, wobei diese beiden Schenkel im rechten Winkel zueinander angeordnet sind. Ein anderer Winkel ist ebenfalls denkbar. Ohne Beschränkung der Allgemeinheit wird im Folgenden von einer rechtwinkligen L-Form ausgegangen.

Im Bereich einer Kontaktstelle 212 in Form einer Falzkante treffen die beiden Schenkel 200 und 202 aufeinander.

Ferner sind zwei seitliche Fortsätze 204 vorgesehen, welche jeweils eine eckige Aussparung 206 zur Aufnahme der Anschläge 108 aufweisen. Die beiden Fortsätze 204 dienen damit als Befestigungsmittel zur Befestigung des Anschlags am zweiten Schenkel 202. Die Anschläge können in die gegenstückigen Aussparungen 206 eingeschoben werden, um darin formschlüssig gegenüber einer Bewegung in einer Ebene senkrecht zur Erstreckungsrichtung der Anschläge 108 aufgenommen zu werden.

Mittels Befestigungslöcher 210 kann der Halter 106 an einer entsprechenden Regalstütze 102 fixiert, beispielsweise angeschraubt werden.
Wie in der Figur 2 ersichtlich ist, befinden sich die Befestigungslöcher 210 auf der der Kontaktstelle 212 abgewandten Hälfte, ja gar dem abgewandten ersten Viertel des Schenkels 200.

Der untere Teil 220 des Schenkels 200 ist damit nicht separat an der Regalstütze 102 befestigt. Die Befestigung erfolgt im Beispiel der Figur 2 ausschließlich über die Löcher 210 und hier durchgeführte Schrauben. Es sei an dieser Stelle angemerkt, dass anstelle von Befestigungslöchern 210 und Schrauben auch andersartige Befestigungsmittel zum Einsatz kommen können, beispielsweise durch Rastelemente, hakenförmige Elemente oder Ähnliches.

Dadurch, dass nun die Befestigung des Schenkels 200 in einem von der Kontaktstelle 212 "weit" beabstandeten Bereich des Schenkels 200 erfolgt, kann sich im Falle starker, auf den Schenkel 202 einwirkender Kräfte der untere Teil 220 des Schenkels 200 in Richtung 240 bewegen. Dies entspricht einem Sichverbiegen des unteren Teils 220 des Schenkels 200.

Dieses Sichverbiegen entspricht ferner einem teilweisen Energieabbau jener Energie, welche auf den Schenkel 202 einwirkt. Die auf den Schenkel 202 einwirkende Kraft (Energie) könnte das Resultat einer Kraft sein, welche über den Anschlag 108, welcher in die Aussparung 206 eingesteckt ist, auf den Fortsatz 204 wirkt.

Beispielsweise könnte beim Platzieren einer Palette auf den Traversen 104 die Palette mit Wucht gegen den entsprechenden Anschlag 108 prallen, sodass der hieraus resultierende Energieeintrag letztlich auf den zweiten Schenkel 202 übertragen wird. Dadurch, dass jedoch der Bereich 220 nicht selbst direkt an der Regalstütze 102 fixiert ist, kann ein entsprechender Energieabbau teilweise dadurch erfolgen, dass der untere Teil 220 in Richtung 240 verbogen wird. Aufgrund eines hieraus resultierenden Energieabbaus, streng genommen einer Umwandlung der Energie in ein Sichverbiegen des ersten Schenkels 200, ist der Energieeintrag, welcher am Befestigungspunkt 210 für die dort verwendeten Schrauben zur Wirkung kommt, reduziert. Damit könnte einem Ausreißen der Befestigung an den Schraubpunkten 210 vorgebeugt werden.

Um die Möglichkeit des Energieabbaus weiter zu erhöhen, ist optional und unabhängig von den vorig beschriebenen Details vorgesehen, dass der Abstand des Vorsprungs 204 zur Kontaktstelle 212 maximiert wird. Aus diesem Grund weist der zweite Schenkel 202 den Bereich 230 auf, durch welchen der Vorsprung 204 letztlich auch vom ersten Schenkel 200 beabstandet ist. Dadurch werden die auf den Bereich 220 aufgrund des Anschlags 108 wirkenden Hebelkräfte vergrößert, sodass in gezielter Weise eine Krafteinleitung auf den Bereich 220 gewährleistet ist.

Ferner ist gemäß Figur 2 optional und unabhängig von den vorig beschriebenen Details vorgesehen, dass die Schenkelfläche des zweiten Schenkels 202 unmittelbar an die Fortsätze 204 angrenzend Aussparungen des äußeren Randes der besagten Schenkelfläche aufweist. Dies entspricht einer gewissen Materialschwächung des Schenkels 202 in diesem Bereich, sodass bei einer entsprechenden Krafteinwirkung auf den Schenkel 202 auch zwischen den Aussparungen 208 eine Biegemöglichkeit für den zweiten Schenkel 202 gegeben ist.

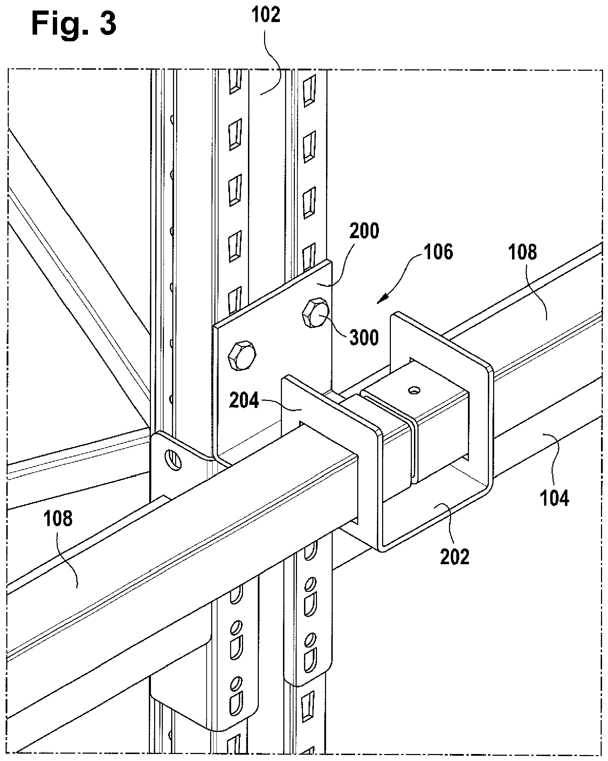

Die Figur 3 zeigt eine perspektivische Ansicht eines Halters 106, welcher mit Schrauben 300 an einer Regalstütze 102 fixiert ist. Die Schrauben 300 fixieren den Schenkel 200 im oberen Bereich, das heißt, dem den zweiten Schenkel abgewandten Bereich an der Regalstütze 102.

Die Fortsätze 204 des zweiten Schenkels 202 haben gemäß Figur 3 zwei aneinander angrenzende Anschläge 104 aufgenommen. Die Anschläge 104 wurden dabei drehfest in die Aussparungen 206 eingesteckt. Es ist auch zusätzlich möglich, dass die beiden Anschläge in den entsprechenden Aussparungen 206 durch ein Verrutschen in Erstreckungsrichtung der Anschläge 104 gesichert sein können. Geeignete Sicherungsmittel sind beispielsweise Schrauben oder Rastmittel.

### Bezugszeichenliste

- 100: Regal
- 101: Richtung
- 102: Regalstütze
- 104: Traverse
- 106: Halter
- 108: Anschlag
- 110: Querverbinder
- 200: erster Schenkel
- 202: zweiter Schenkel
- 204: Vorsprung
- 206: Aussparung
- 208: Aussparung
- 210: Loch
- 212: Kontaktstelle
- 220: Bereich
- 230: Bereich
- 240: Richtung
- 300: Schraube

## Patentansprüche

1. Regalsystem mit einem Anschlag (108) und Regalstützen (102), wobei das Regalsystem eine Auflage (104) für im Regalsystem zu lagerndes Stückgut aufweist, wobei der Anschlag (108) dazu ausgebildet ist, eine Anschlagfläche für das zu lagernde Stückgut bereitzustellen, sowie einen Halter (106) zum Befestigen des Anschlags (108) an einer der Regalstützen (102) eines Regals (100), wobei der Halter (106) einen ersten Schenkel (200) und einen zweiten Schenkel (202) aufweist, wobei der erste Schenkel (200) und der zweite Schenkel (202) über eine Kontaktstelle (212) aneinander fixiert sind, wobei der erste Schenkel (200) ein erstes Befestigungsmittel (210) zur Fixierung des ersten Schenkels (200) an der Regalstütze (102) aufweist, wobei sich der erste Schenkel (200) im montierten Zustand parallel zur Erstreckungsrichtung der Regalstütze (102) erstreckt, wobei das erste Befestigungsmittel (210) in der Erstreckungsrichtung gesehen auf der der Kontaktstelle (212) abgewandten Hälfte des ersten Schenkels (200) angeordnet ist und die der Kontaktstelle (212) zugewandte Hälfte des ersten Schenkels (200) frei von weiteren Befestigungsmitteln zur Fixierung des ersten Schenkels (200) an der Regalstütze (102) ist, wobei der zweite Schenkel (202) ein zweites Befestigungsmittel (204) zur Befestigung des Anschlags (108) am zweiten Schenkel (202) aufweist, wobei die Schenkelflächen des ersten Schenkels (200) und des zweiten Schenkels (202) abgewinkelt zueinander angeordnet sind, wobei das erste Befestigungsmittel (210) in der Erstreckungsrichtung gesehen auf dem der Kontaktstelle (212) abgewandten ersten Drittel der Schenkelfläche des ersten Schenkels (200) angeordnet ist und die der Kontaktstelle (212) zugewandten Zweidrittel des ersten Schenkels (200) frei von weiteren Befestigungsmitteln zur Fixierung des ersten Schenkels (200) an der Regalstütze (102) sind.

2. Regalsystem nach Anspruch 1, wobei die Schenkelflächen des ersten Schenkels (200) und des zweiten Schenkels (202) eine L-Form bilden.

3. Regalsystem nach Anspruch 2, wobei der erste Schenkel (200) senkrecht auf dem zweiten Schenkel (202) steht.

4. Regalsystem nach einem der vorigen Ansprüche, wobei das erste Befestigungsmittel (210) ein Schraubloch des ersten Schenkels (200) zur Aufnahme von Schrauben umfasst.

5. Regalsystem nach einem der vorigen Ansprüche, wobei das zweite Befestigungsmittel (204) zumindest einen biegesteif mit dem zweiten Schenkel verbundenen Fortsatz (204) umfasst, wobei der Fortsatz eine Öffnung (206) zur Aufnahme des Anschlags (108) aufweist.

6. Regalsystem nach Anspruch 5, wobei die Ebene der Aufnahmeöffnung (206) senkrecht zur Schenkelfläche des zweiten Schenkels (202) steht.

7. Regalsystem nach einem der vorigen Ansprüche 5-6, wobei die Aufnahmeöffnung (206) zur drehfesten Aufnahme des Anschlags (108) ausgebildet ist.

8. Regalsystem nach einem der vorigen Ansprüche 5-7, wobei der Fortsatz (204) einstückig mit der Schenkelfläche des zweiten Schenkels (202) ausgebildet ist.

9. Regalsystem nach einem der vorigen Ansprüche, ferner mit einer Aussparung (208) der Schenkelfläche des zweiten Schenkels (202), wobei die Aussparung (208) zwischen der Kontaktstelle (212) und dem zweiten Befestigungsmittel angeordnet ist.

10. Regalsystem nach Anspruch 9, wobei die Aussparung (208) durch eine Aussparung des äußeren Randes der Schenkelfläche des zweiten Schenkels (202) gegeben ist.

11. Regalsystem nach Anspruch 9, wobei die Aussparung unmittelbar an das zweite Befestigungsmittel (204) angrenzt.

12. Regalsystem nach einem der vorigen Ansprüche, wobei der erste Schenkel (200) zumindest zwei der ersten Befestigungsmittel aufweist und die beiden ersten Befestigungsmittel in der Erstreckungsrichtung des Anschlags (108) gesehen symmetrisch zur Schenkelfläche des ersten Schenkels (200) angeordnet sind.

13. Regalsystem nach einem der vorigen Ansprüche, wobei das zweite Befestigungsmittel (204) von der Kontaktstelle (212) beabstandet ist, wobei der Abstand mindestens ein Drittel der Erstreckungslänge der Schenkelfläche des ersten Schenkels (200) in der Erstreckungsrichtung der Regalstütze (102) gesehen beträgt.

14. Regalsystem nach einem der vorigen Ansprüche, wobei die Schenkelfläche des zweiten Schenkels (202) im montierten Zustand senkrecht zur Erstreckungsrichtung der Regalstütze (102) ist.

## Claims

1. A shelf system with a stop (108) and shelf supports (102), wherein the shelf system has a support area (104) for piece goods to be stored in the shelf system, wherein the stop (108) is designed to provide a stop surface for the piece goods to be stored, and a holder (106) for securing the stop (108) to one of the shelf supports (102) of a shelf (100), wherein the holder (106) has a first limb (200) and a second limb (202), wherein the first limb (200) and the second limb (202) are fixed to one another by means of a contact point (212), wherein the first limb (200) has a first securing means (210) for fixing the first limb (200) to the shelf support (102), wherein the first limb (200), in the assembled state, extends parallel to the direction of extent of the shelf support (102), wherein the first securing means (210), as considered in the direction of extent, is arranged on the half of the first limb (200) facing away from the contact point (212), and the half of the first limb (200) facing towards the contact point (212) is free from further securing means for fixing the first limb (200) to the shelf support (102), wherein the second limb (202) has a second securing means (204) for securing the stop (108) to the second limb (202), wherein the limb faces of the first limb (200) and of the second limb (202) are angled relative to one another, wherein the first securing means (210), as considered in the direction of extent, is arranged on the first third of the limb face of the first limb (200) facing away from the contact point (212), and the two thirds of the first limb (200) facing towards the contact point (212) are free from further securing means for fixing the first limb (200) to the shelf support (102).

2. The shelf system according to claim 1, wherein the limb faces of the first limb (200) and of the second limb (202) form an L shape.

3. The shelf system according to claim 2, wherein the first limb (200) is arranged perpendicularly on the second limb (202).

4. The shelf system according to any one of the preceding claims, wherein the first securing means (210) comprises a screw hole of the first limb (200) for receiving screws.

5. The shelf system according to any one of the preceding claims, wherein the second securing means (204) comprises at least one extension (204) rigidly connected to the second limb, wherein the extension has an opening (206) for receiving the stop (108).

6. The shelf system according to claim 5, wherein the plane of the receiving opening (206) is perpendicular to the limb face of the second limb (202).

7. The shelf system according to either one of preceding claims 5 to 6, wherein the receiving opening (206) is designed to receive the stop (108) in a rotationally fixed manner.

8. The shelf system according to any one of preceding claims 5 to 7, wherein the extension (204) is formed in one piece with the limb face of the second limb (202).

9. The shelf system according to any one of the preceding claims, further having a cutout (208) of the limb face of the second limb (202), wherein the cutout (208) is arranged between the contact point (212) and the second securing means.

10. The shelf system according to claim 9, wherein the cutout (208) is formed by a cutout of the outer edge of the limb face of the second limb (202).

11. The shelf system according to claim 9, wherein the cutout is directly adjacent to the second securing means (204).

12. The shelf system according to any one of the preceding claims, wherein the first limb (200) has at least two of the first securing means and the two first securing means are arranged symmetrically with respect to the limb face of the first limb (200), as considered in the direction of extent of the stop (102).

13. The shelf system according to any one of the preceding claims, wherein the second securing means (204) is distanced from the contact point (212), wherein the distance is at least a third of the length of extent of the limb face of the first limb (200) as considered in the direction of extent of the shelf support (102).

14. The shelf system according to any one of the preceding claims, wherein the limb face of the second limb (202), in the assembled state, is perpendicular to the direction of extent of the shelf support (102).

## Revendications

1. Système d'étagère avec une butée (108) et des supports d'étagère (102), où le système d'étagère présente un système de dépose (104) pour une cargaison à stocker dans le système d'étagère, où la butée (108) est conçue pour procurer une surface de butée pour la cargaison à stocker, ainsi qu'un collier (106) pour la fixation de la butée (108) sur l'un des supports d'étagère (102) d'une étagère (100), où le collier (106) présente une première branche (200) et une deuxième branche (202), où la première branche (200) et la deuxième branche (202) sont fixées l'une à l'autre par le biais d'un point de contact (212), où la première branche (200) présente un premier moyen de fixation (210) pour la fixation de la première branche (200) sur le support d'étagère (102), où la première branche (200) s'étend à l'état monté de manière parallèle par rapport à la direction d'extension du support d'étagère (102), où le premier moyen de fixation (210), vu dans la direction de l'extension, est disposé sur la moitié de la première branche (200) à l'opposé du point de contact (212), et la moitié de la première branche (200) orientée vers le point de contact (212) est exempte de tout autre moyen de fixation pour la fixation de la première branche (200) sur le support d'étagère (102), où la deuxième branche (202) présente un deuxième moyen de fixation (204)) pour la fixation de la butée (108) sur la deuxième branche (202), où les surfaces de branche de la première branche (200) et de la deuxième branche (202) sont disposées en faisant un angle l'une par rapport à l'autre, où le premier moyen de fixation (210), vu dans la direction d'extension, est disposé sur le premier tiers de la surface de branche de la première branche (200) à l'opposé du point de contact (212) et les deux tiers de la première branche (200) orientés vers le point de contact (212) sont exempts de tout autre moyen de fixation pour la fixation de la première branche (200) sur le support d'étagère (102).

2. Système d'étagère selon la revendication 1, dans lequel les surfaces de branche de la première branche (200) et de la deuxième branche (202) forment une figure en L.

3. Système d'étagère selon la revendication 2, dans lequel la première branche (200) se maintient de manière verticale sur la deuxième branche (202).

4. Système d'étagère selon l'une des revendications précédentes, dans lequel le moyen de fixation (210) comprend un orifice de vissage de la première branche (200) pour l'admission de vis.

5. Système d'étagère selon l'une des revendications précédentes, dans lequel le deuxième moyen de fixation (204) comprend au moins un appendice (204) relié de manière rigide sans pouvoir être plié avec la deuxième branche, où l'appendice présente un orifice (206) pour l'admission de la butée (108).

6. Système d'étagère selon la revendication 5, dans lequel le plan de l'orifice d'admission (206) est perpendiculaire à la surface de branche de la deuxième branche (202).

7. Système d'étagère selon l'une des revendications précédentes 5 à 6, dans lequel l'orifice d'admission (206) est conçu pour l'admission de la butée (108) sans qu'elle ne puisse être mise en rotation.

8. Système d'étagère selon l'une des revendications précédentes 5 à 7, dans lequel l'appendice (204) est conçu d'un seul tenant avec la surface de branche de la deuxième branche (202).

9. Système d'étagère selon l'une des revendications précédentes, doté en outre d'un renfoncement (208) de la surface de branche de la deuxième branche (202), où le renfoncement (208) est agencé entre le point de contact (212) et le deuxième moyen de fixation.

10. Système d'étagère selon la revendication 9, dans lequel le renfoncement (208) est donné par un renfoncement du bord extérieur de la surface de branche de la deuxième branche (202).

11. Système d'étagère selon la revendication 9, dans lequel le renfoncement est immédiatement à la limite avec le deuxième moyen de fixation (204).

12. Système d'étagère selon l'une des revendications précédentes, dans lequel la première branche (200) présente au moins deux parmi les premiers moyens de fixation et les deux premiers moyens de fixation sont disposés de manière symétrique par rapport à la surface de branche de la première branche (200), vu dans la direction d'extension de la butée (108).

13. Système d'étagère selon l'une des revendications précédentes, dans lequel le deuxième moyen de fixation (204) est placé à distance du point de contact (212), où la distance représente au moins un tiers de la longueur d'extension de la surface de branche de la première branche (200), vu dans la direction d'extension du support d'étagère (102).

14. Système d'étagère selon l'une des revendications précédentes, dans lequel la surface de branche de la deuxième branche (202) est perpendiculaire par rapport à la direction d'extension du support d'étagère (102) à l'état monté.
